# EUROPEAN PATENT SPECIFICATION

(11) **EP 4 319 048 B1**
(45) Date of publication and mention of the grant of the patent: **18.03.2026**
(21) Application number: 23188837.1
(22) Date of filing: 01.08.2023
(51) Int. Cl.: H04L 9/40, G06N 20/00

(54) **ABNORMAL MODEL BEHAVIOR DETECTION**
ERKENNUNG VON ABNORMALEM MODELLVERHALTEN
DÉTECTION DE COMPORTEMENT DE MODÈLE ANORMAL

(30) Priority: 05.08.2022 US 202263370591 P
(43) Date of publication of application: 07.02.2024
(73) Proprietor: Nokia Technologies Oy, 02610 Espoo (FI)
(72) Inventor: AGGARWAL, Chaitanya, Munich (DE); KHARE, Saurabh, Bangalore (IN); SUBRAMANYA, Tejas, Munich (DE)
(74) Representative: Samson & Partner Patentanwälte mbB

(56) References cited:
- WO-A1-2019/075399
- US-A1- 2020 136 890

## Description

### FIELD

Various example embodiments of the present disclosure generally relate to the field of telecommunication and in particular, to abnormal model behavior detection.

### BACKGROUND

Communication networks have been developed with the capability to support a variety of communication services, such as Internet of Things (IoT) and Enhanced Mobile Broadband (eMBB). The increasing flexibility of the networks to support services with diverse requirements may present operational and management challenges. Therefore, the networks management system can benefit from network data analytics for improving networks performance and efficiency to accommodate and support the diversity of services and requirements.

The document WO 2019/075399 A1 relates to performance abnormality detection and describes that a computing device receives, from a remote device, one or more abnormality detection models for detecting anomaly of one or a plurality of applications with respect to one or more resource usage, obtains resource usage data associated with each application, determines, using the one or more abnormality detection models, whether each application has anomaly in a resource usage, and takes an action in response. The abnormality detection model is built using a machine learning technique at the remote device based on data collected from multiple devices. The resource usage data includes information about applications used by the computing device, e.g., usage or energy consumption of one or more hardware components or one or more services accessed by an application on the device. An abnormality detection result may include likelihoods of an application falling into an abnormality level in a plurality of abnormality levels.

Further background art is known from the document US 2020/136890 A1 relating to anomaly detection and classification in networked systems.

### SUMMARY

According to various example embodiments of the present disclosure, there are provided an apparatus, a method, and a computer program product, as defined by the claims.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling chart for abnormal model behavior detection according to some example embodiments of the present disclosure;
FIG. 3 illustrates an example signaling chart for abnormal model behavior detection according to some further example embodiments of the present disclosure;
FIG. 4A to FIG. 4F illustrate example types of model explanations according to some example embodiments of the present disclosure;
FIG. 5 illustrates a flowchart of a method implemented at a first apparatus according to some example embodiments of the present disclosure;
FIG. 6 illustrates a flowchart of a method implemented at a second apparatus according to some example embodiments of the present disclosure;
FIG. 7 illustrates a simplified block diagram of an apparatus that is suitable for implementing example embodiments of the present disclosure; and
FIG. 8 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "network function" or "NF" refers to a physical, virtual or hybrid function or entity which is deployed at a network side and provides one or more services to clients/consumers. For example, an NF may be arranged at a device in an access network or a core network. The NF may be implemented in hardware, software, firmware, or some combination thereof.

### Example Environment

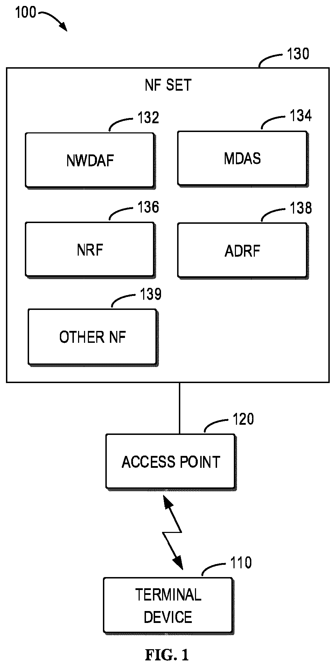

FIG. 1 illustrates an example communication system 100 in which example embodiments of the present disclosure can be implemented. It is to be understood that the elements shown in the communication system 100 are intended to represent main functions provided within the system. As such, the blocks shown in FIG. 1 reference specific elements in communication networks that provide these main functions. However, other network elements may be used to implement some or all of the main functions represented. Also, it is to be understood that not all functions of a communication network are depicted in FIG. 1. Rather, functions that facilitate an explanation of illustrative embodiments are represented.

Communications in the communication system 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

As shown, the communication system 100 comprises a terminal device 110 that communicates with an access point 120. The access point 120 is illustratively part of an access network of the communication system 100. Such an access network may comprise, for example, a 5G System having a plurality of base stations and one or more associated radio network control functions. The base stations and radio network control functions may be logically separate entities, but in a given embodiment may be implemented in the same physical network element, such as, for example, a base station router or femto cellular access point.

In some example embodiments, part of the communication system 100 may be implemented according to Service Based Architecture (SBA). Accordingly, the communication system 100 comprises a network function (NF) set 130 to which the access point 120 in this illustrative embodiment can be operatively coupled. The NF set 130 comprises a series of NFs for each corresponding service type. One or more NFs in the NF set 130 may be part of a core network (CN) of the communication system 100.

As illustrated, the NF set 130 comprises a Network Data Analytics Function (NWDAF) 132, a Management Data Analytics Service (MDAS) function 134, a Network Repository Function (NRF) 136, an Analytics Data Repository Function (ADRF) 138, and one or more other NFs 139. In some example embodiments, ADRF 138 may be included as part of NWDAF 132. Each of the NFs may be instantiated in one or more instances as required. The instances of the NFs may be owned by the same or different vendors or operators.

An NF may interact with one or more other NFs and follow the consumer-producer paradigm. For example, following the consumer-producer paradigm, an NF subscribing or consuming a service provided by another NF may be referred to as an "NF service consumer" or "NFc" while an NF providing the subscribed or consumed service may be referred to as an "NF service producer" or "NFp."

In some example embodiments, one or more NFs may rely on a computational logic or algorithm to provide their services or functions. For example, NWDAF 132 may rely on a computational logic or algorithm to analyze the received data in order to produce the desired statistics and/or predictions. Such logic or algorithms may be implemented as an Artificial Intelligence (Al)/Machine Learning (ML) model. As used herein, the term "ML model" or "AI model" represent logic or an algorithm that can be "trained" by data and human expert input as examples to replicate a decision an expert would make when provided that same information. In the following, "ML model" and "AI model" are used interchangeably, or sometimes may be referred to as AI/ML model.

Machine learning may generally involve three stages, a data stage to prepare data for the model, a training stage to train the ML model with training data, and an inference stage to apply the trained ML model to generate an output for real-world input data. During the training stage, training data is run through an AI/ML model to derive the associated loss and adjust the parameterization of that AI/ML model based on the computed loss. During the inference stage, the real-world input data are processed by the ML model based on the model parameter values determined in the training stage.

In some example embodiments where a ML model for network data analytics is utilized, NWDAF 132 may be decomposed as a NWDAF Model Training Logical Function (NWDAF MtLF) for training logic of the ML model, and a NWDAF Analytics Logical Function (NWDAF AnLF) for inference logic of the ML model. NWDAF MtLF and NWDAF AnLF may be collocated together within a same NWDAF or may be implemented at different NWDAFs. Similarly, training and inference logic of a ML model for other types of services may also be instantized at other NFs.

### Work Principle and Example Signaling Charts

Currently, the communication system supports sharing of ML models amongst different vendors/operators. This sharing provides opportunities and challenges. The opportunity is the ability to efficiently share the ML models with consumers with lower complexity and dynamically. However, there are also security concerns over sharing of ML model internals with NFs belonging to other vendors, since reverse engineering a ML model can leak the proprietary information about both the algorithm and the data which was used to train that model.

There are also aspects being discussed that the ML model should be shared in the containerized format as a block-box, so as to enable cross platform compatibility and improve security. As such, when inputs are presented (whose goal is to discover something about the model vulnerabilities), it is unlikely to detect that it is being gamed into revealing something during the model sharing scenario.

In the case of a black-box approach of sharing the ML models (for instance in a containerized format), the ML model can still be extracted from the container, and thus leaking the model internals. The target NF with the ML model executed can perform reverse engineering and retrieve the model details. In addition, once the ML model is shared, there exists no way to detect if the ML model is behaving maliciously or not (for instance due to a malware injected in the ML model and/or the container in which the ML model is deployed). Further, after sharing the ML model, there exists no mechanism to detect if the ML model is susceptible to an adversarial attack or not, and if the output provided by the ML model is correct/genuine or not.

According to some example embodiments of the present disclosure, there is provided a solution for abnormal model behavior detection in the context of model sharing. In this solution, a ML model is provisioned to a first apparatus together with expected behavior information related to the ML model. While the ML model is executing, the first apparatus is configured to monitor behavior information of the ML model and compare the monitored behavior information with the expected behavior information, to determine whether an abnormal behavior of the ML model occurs. As such, early detection of abnormal model behaviors is supported, to protect the ML model from being attacked or maliciously tampered and mitigate the problem of potential data leakage. The data and model security can thus be improved.

In some example embodiments, in the case that the first apparatus finds an abnormal behavior, it may request a second apparatus which may be trusted by an owner or producer of the ML model or an operator, to perform anomaly detection, to validate the abnormal behavior. In this case, the owner or operator may be able have a positive confirmation of whether the ML model is malicious and may take following actions accordingly.

Example embodiments of the present disclosure will be described in detail below with reference to the accompanying drawings.

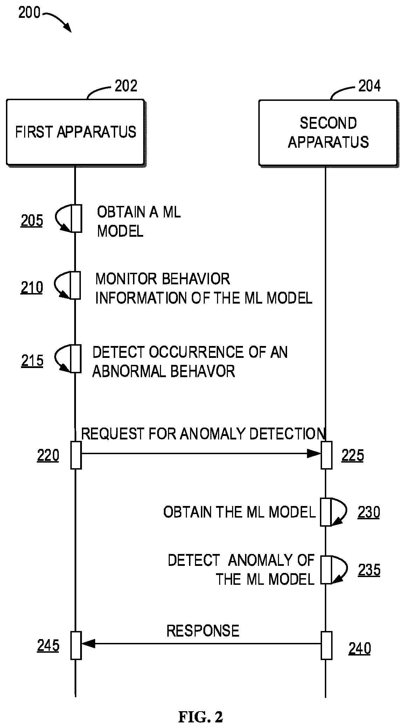

Reference is now made to FIG. 2, which shows a signaling chart 200 for communication according to some example embodiments of the present disclosure. As shown in FIG. 2, the signaling chart 200 involves a first apparatus 202 and in some example embodiments, further involves a second apparatus 204.

The first apparatus 202 obtains 205 a ML model and expected behavior information of the ML model.

In some example embodiments, the first apparatus 202 may be considered as comprising a NF service consumer and can be provisioned with a ML model for execution. The second apparatus 204 is considered as a trusted apparatus for model anomaly detection, to confirm whether the ML model is malicious. In some example embodiments, the first apparatus 202 may comprise an NF which relies on the ML model, and thus may be referred to as an NF apparatus.

In some example embodiments, the first apparatus 202 may comprise NWDAF 132 in the communication system 100. For example, the first apparatus 202 may comprise NWDAF AnLF which uses a ML model for network data analytics tasks. As another example, the first apparatus 202 may comprise NWDAF MtLF which configures to train a ML model (the ML model is executed during the training phase). In some other example embodiments, the first apparatus 202 may comprise other NF or network element in the communication system 100, such as MDAS, the access point, or others.

In some example embodiments, the ML model may be a model capable of generating feature-relevance explanation on a decision/prediction. The ML model may be any type of ML model and can be configured to implement corresponding analytics or processing task in a communication system according to actual applications and requirements. There is no limitation to the ML model in the example embodiments of the present disclosure. As some example embodiments, a ML model utilized or trained at NWDAF 132 may be configured to analyze network/UE data so as to predict cell load, NF load, mobility prediction, communication prediction, and so on.

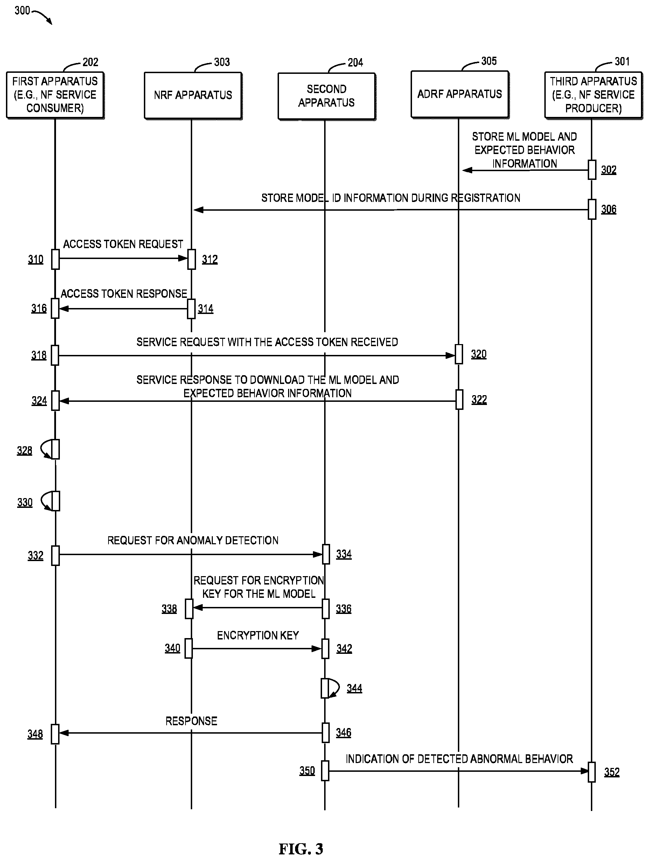

In some example embodiments, the ML model may be owned or provisioned by other apparatus, vendors, or operators. In some example embodiments, the ML model may be provisioned by a third party locally at the first apparatus 202 for training or inference. In some example embodiments, the ML model may be shared between NFs, for example, may be shared between NWDAFs. Some details about such example embodiments will be described below with reference to FIG. 3. The first apparatus 202 may be a consumer of a NF which provisions the ML model. For example, the first apparatus 202 which is NWDAF AnLF may subscribe a trained ML model from NWDAF MtLF.

If the ML model is provided to the first apparatus 202 for execution, attention needs to pay to the security problem of the ML model, especially when the ML model is shared between different vendors. The threat model for such multivendor sharing may include not-trust by definition. E.g., Vendor A may not trust B or C, and vice-versa, A, B, and C. It is not expected that the ML model is maliciously tempered due to leakage of model internals or attacks.

In some example embodiments, the first apparatus 202 may obtain an encrypted version of the ML model for execution. For example, the ML model may be deployed as a container. The first apparats 202 may not need to be aware of the model internals and can execute the ML model by providing a model input to the model and then receiving a model output.

In the example embodiments of the present disclosure, expected behavior information of the ML model is defined and is provided to the first apparatus 202 while sharing the ML model. The expected behavior information may be defined by an owner or producer of the ML model or an operator (which may be trusted by the vendors), to describe normal behaviors of the ML model in one or more aspects. In some example embodiments, the expected behavior information may be provided as metadata of the ML model. The expected behavior information provides an opportunity for the first apparatus 202 to detect anomalies in the ML model.

In some example embodiments, the expected behavior information may indicate an expected resource consumption behavior of the ML model. The expected resource consumption behavior may define the way the resource is consumed for execution of the ML model. For example, the expected resource consumption behavior may define resource consumption of the ML model occurred during the execution stage, for example, when a request for execution is sent to the ML model. The request for execution may include a request for inference, or a request for training the ML model with an input training sample, depending on the usage of the ML model at the first apparatus 202. The expected resource consumption behavior may further indicate the type of the request for inference, for example, in the form of an application programming interface (API) request, such as a REST API request.

Accordingly, if the ML model is executed normally, it will be observed that the resource consumption may be observed when a request for execution is sent to the ML model, for example, by the first apparatus 202 or other entity which is allowed to utilize the ML model). The ML model deployed may be placed at the rest of the time and even though it has a Process ID allocated to it, the ML model will not consume any resource (or consume very minimal resource to keep the process alive) if no request for execution is triggered.

In some example embodiments, the expected behavior information may additionally or alternatively indicate an expected network communication behavior of the ML model, for example, if the execution of the ML model involves network communication. For example, during the execution stage, the ML model may listen to an incoming model input to receive the request for execution and provide an outgoing model output. The expected network communication behavior may define one or more communication addresses on which the ML model communicates. The communication addresses may include one or more port numbers and/or host addresses on which the ML model communicates. The host addresses may include Fully Qualified Domain Name (FQDN) addresses or Internet Protocol addresses, depending on the networking environment for the ML model.

Accordingly, if the ML model is behaving normally, it will be observed that the ML model may not have any communications other than the one defined by the expected network communication behavior, for example, have no communication other than on the specific port numbers. In some example embodiments, if the ML model is provisioned as a container, the expected network communication behavior may define the communication addresses of the host on which the container is deployed. As such, normally the ML model may have incoming and outgoing communication with the host on which the container is deployed.

In some example embodiments, the expected behavior information may additionally or alternatively indicate information related to expected model outputs. For example, the expected behavior information may indicate an expected type of a model output, such as string, numerical, Boolean, or mixed. The expected behavior information may additionally or alternatively indicate an expected value range of a model output, such as the lower bound and/or the upper bound in which the model output for a given model input can vary. If it is observed that the ML model provides a model output that deviates from the expected type or expected value range, the ML model is suspicious.

Additionally, or as an alternative, the expected behavior information may indicate an expected explanation type of the ML model. Interpretability is a good element of trust for a ML model. An explanation is an interpretable description of a model behavior. For an explanation to be valid it needs to be faithful to the model and it needs to be understandable to the user. There are two types of explanations: local and global. Models can be explained either by making them interpretable from the beginning - simple and shallow models, or by passing them through explainers which can produce explanations in a post-hoc manner.

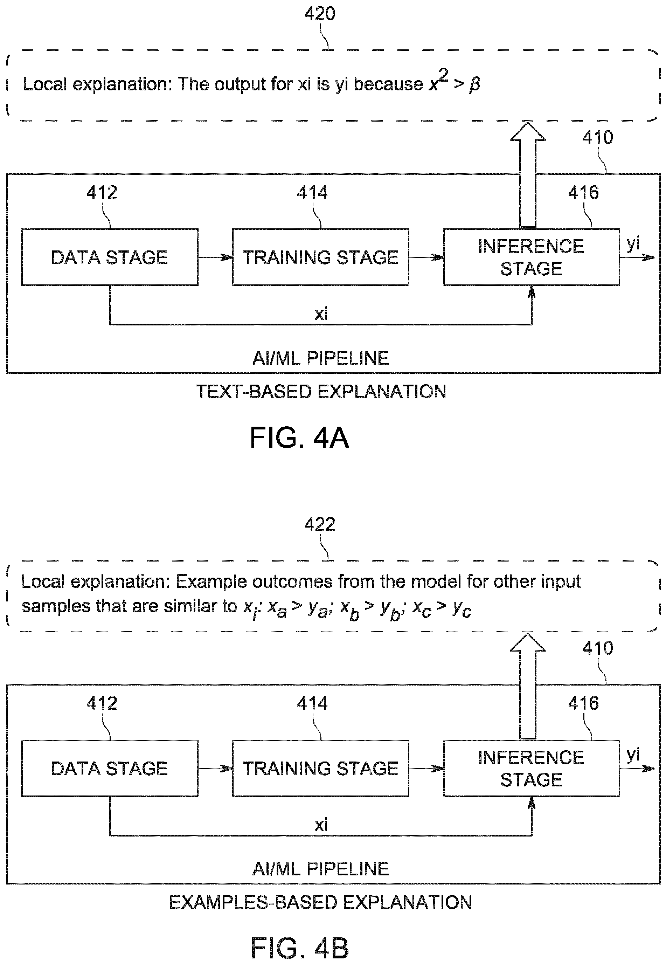

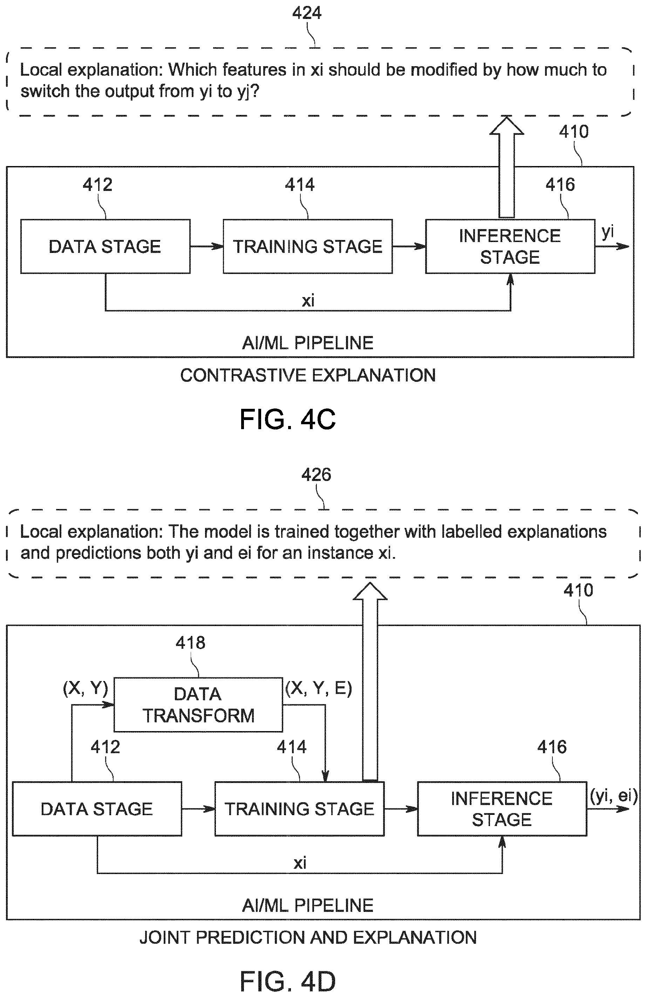

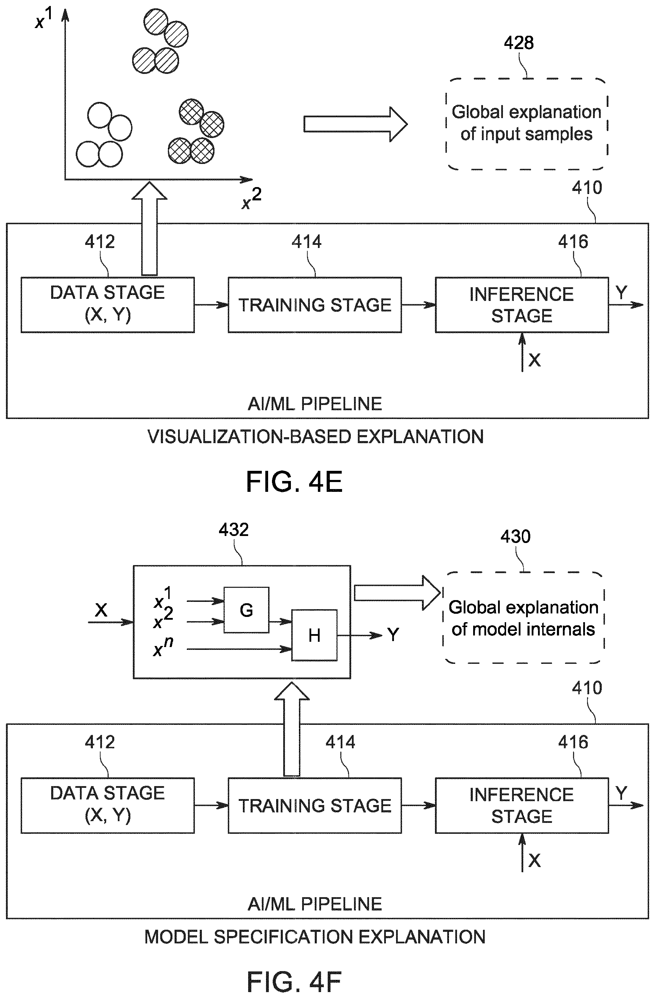

FIG. 4A to FIG. 4F provides some example explanation types for local and global explanations. As shown in FIG. 4A to FIG. 4F, the AI/ML pipeline 410 includes a data stage 410, a training stage 414, and an inference stage 416, as mentioned above. The model explanations can be derived from the inference stage, the training stage or even the data stage of the ML model. For example, as local explanations, a text-based explanation 420 in FIG. 4A, an example-based explanation 422 in FIG. 4B, and a contrastive explanation 424 FIG. 4C can be derived from the inference stage, for example, by analyzing the model input and model output samples during the inference stage. A joint prediction and explanation 426 in FIG. 4D may be derived during the training stage, by transforming training data used for training in a data transform stage 418. As a global explanation, a visualization-based explanation 428 in FIG. 4E can be derived by classifying data available in the data stage 412. A model specification explanation 430 in FIG. 4F can be derived by prying into the model internals (an example model 432 is illustrated).

It should be appreciated that the model explanations illustrated in FIG. 4A to FIG. 4F are provided for the purpose of illustration only and there may be other or different model explanation types. It should also be appreciated that the techniques or algorithms for deriving of model explanations and classifying of model explanations are not limited in the example embodiments of the present disclosure.

By providing the expected explanation type of the ML model, the first apparatus 202 may monitor the ML model to detect whether the monitored explanation is different from the expected explanation type.

With the expected behavior information of the ML model, the first apparatus 202 is configured to monitor execution behaviors of the ML model to detect anomaly. The first apparatus 202 monitors 210 behavior information of the ML model during execution of the ML model.

The monitoring of the behavior information may be based on the type(s) of the expected behavior information received. In some example embodiments, the first apparatus 202 may monitor a resource consumption behavior of the ML model, for example, by monitoring the time when the resource consumption, and/or whether the resource consumption occurs after a request for model execution is sent to the ML model. In some example embodiments, the first apparatus 202 may monitor a network communication behavior of the ML model, for example, by monitoring the network addresses related to the network communications. In some example embodiments, the first apparatus 202 may monitor one or more model outputs provided by the ML model for at least one model input, to determine the output type and/or value range of the monitored model outputs.

In some example embodiments, the first apparatus 202 may monitor at least one model input and at least one model output provided by the ML model for at least one model input, to derive an explanation of the ML model.

In some example embodiments, the first apparatus 202 may continuously monitor the resource communication, the network communication, and/or the model input and outputs. In some example embodiments, the first apparatus 202 may perform the monitoring periodically. In some example embodiments, the first apparatus 202 may perform the monitoring either at random or regular intervals.

It should be appreciated that some example types of behavior information and corresponding expected behavior information are discussed above. In some example embodiments, it is possible to define one or more other types of expected behavior information related to the ML model for the purpose of model anomaly detection. The scope of the present disclosure is not limited in the regard about the specific behavior information.

The first apparatus 202 determines 215 occurrence of an abnormal behavior of the ML model during the execution by comparing the monitored behavior information with the expected behavior information.

In some example embodiments, a mismatch between one or more types of the monitored behavior information and the expected behavior information may indicate a potential abnormal behavior.

Specifically, if the first apparatus 202 determines a mismatch between the monitored resource consumption behavior with the expected resource consumption behavior, for example, the ML model consumes resources when no request for inference is sent, then the ML model is suspicious. Similarly, the first apparatus 202 may determine the abnormal behavior of the ML model by detecting a mismatch between the monitored network consumption behavior with the expected network consumption behavior, a mismatch between a type of the at least one monitored model output and the expected type, a mismatch between a value range of the at least one monitored model output and the expected value range, a mismatch between a type of the monitored explanation and the expected explanation type, and so on.

In some example embodiments, the first apparatus 202 may determine that an abnormal behavior occurs if one type of the monitored behavior (e.g., the resource consumption behavior) is detected to be deviated from the expected behavior. In some example embodiments, to instantaneous jitters or other errors, the first apparatus 202 may determine that an abnormal behavior happens if the mismatch between the monitored behavior and the expected behavior occurs for a threshold number of times, and/or lasts for a threshold period of time. The specific rules for the first apparatus 202 to make the decision about the abnormal behavior may be configured as required.

In the case that an anormal behavior of the ML model is detected, the first apparatus 202 may determine a following action to be performed on this ML model. In some example embodiments, in the case of abnormal behavior, for example, if the model output does not match with the value range given in the expected behavior information, the first apparatus 202 may initiate detection of adversarial attack.

Adversarial attack is a malicious attempt which tries to perturb an input sample x0 to a new sample x such that x is predicted by the ML model to provide an error output. This raises many important questions such as vulnerability of machine learning algorithms and the associated security threats. If a ML model has been endured adversarial attack, it may provide unexpected output for certain input.

Early detection of adversarial attacks (in case of a malicious ML model) by the first apparatus 202 may be performed using pretrained adversarial samples and/or feature-relevance explanations. To detect whether the ML model has been attacked, in some example embodiments, the first apparatus 202 may apply at least one adversarial sample input to the ML model, to obtain at least one sample output. The first apparatus 202 may compare the at least one sample output with at least one ground-truth sample output for the at least one adversarial sample. If the sample output provided by the current ML model is different from the ground-truth sample output, it is likely that the ML model has been endured adversarial attack.

An adversarial sample input may be carefully designed for the purpose of adversarial attack detection. In some example embodiments, the adversarial sample input may be predefined by the first apparatus 202, or may be provided together with the ML model, for example, by the owner or producer of the ML model or by an operator. In some example embodiments, if the first apparatus 202 trusts the owner or producer of the ML model, it may assume that the ML model corruption occurred is not due to the owner or producer maliciously tampering the ML model, and thus the detection is beneficial as well to detect if the ML model is affected by an adversarial attack using the adversarial sample inputs and outputs provided by the owner or producer (and the explainable ML model components as well). In the case that the first apparatus 202 does not trusts the one who provisions the ML model, then the first apparatus 202 may use its own pretrained or preconfigured adversarial samples (maybe obtained using its own historical data) to detect if the ML model is behaving maliciously or not by analyzing the model output generated by the ML model against the ground-truth sample output.

In some example embodiments, in the case of detecting an abnormal behavior of the ML model, the first apparatus 202 may request the second apparatus 204 for further confirmation. The second apparatus 204 may be a trusted apparatus by the first apparatus 202. For example, the second apparatus 204 may comprise MDAS 134 or a trusted NWDAF.

In the signaling chart 200, the first apparatus 202 transmits 220 a request for anomaly detection on the ML model to the second apparatus 204. In some example embodiments, the first apparatus 202 may request the second apparatus 204 to perform anomaly detection in either case of an abnormal behavior is detected, or the adversarial attack is detected.

The request may at least comprise the monitored behavior information of the ML model during execution of the ML model on the first apparatus 202. In some example embodiments, the request may further comprise the abnormal behavior detection and/or explanation of the decision by the first apparatus 202. In some example embodiments, the first apparatus 202 may determine an abnormal trust score to indicate how confident the first apparatus 202 is about the abnormal behavior of the first apparatus 202.

The second apparatus 204 receives 225 the request for anomaly detection on a ML model and may perform further detection. The second apparatus 204 obtains 230 a decrypted version of the ML model. To positively confirm whether the ML model is malicious, the second apparatus 204 may be able to obtain a decrypted version of the ML model. The second apparatus 204 detects 23 5 anomaly of the ML model by analyzing the decrypted version of the ML model against the behavior information.

In some example embodiments, the second apparatus 204 may download an encrypted version of the ML model and have access to an encryption key to decrypt the ML model, to obtain a decrypted version of the ML, model. In some example embodiments, the encryption key may be maintained at an authorization server, such as NRF 136 in the communication system 100. The second apparatus 204 may request for the encryption key from the authorization server.

With the decrypted version of the ML model, the second apparatus 204 may apply probe to the model internals to analyze whether the ML model was actually malicious based on the behavior information monitored by the first apparatus 202. In some example embodiments, the second apparatus 204 may also have access to the expected behavior information of the ML model which may be used to detect whether there is any mismatch between the behavior of the normal ML model and the behavior monitored at the first apparatus.

The second apparatus 204 transmits 240, to the first apparatus 202, a response at least indicating a positive detection or a negative detection of anomaly of the ML model. By receiving 245 the response, the first apparatus 202 may perform a following action on the ML model based on the response, for example, whether or not to discard the ML model. In the case that the second apparatus 204 confirm the anomaly of the ML model, the first apparatus 202 may discard the ML model.

In some example embodiments, if a positive confirmation of anomaly of the ML model is determined, the second apparatus 204 may determine an act to address the anomaly in ML models. In some example embodiments, the second apparatus 204 may transmit a recommendation to discard the ML model based on the response indicating the positive detection of anomaly of the ML model.

In some example embodiments, based on a detection of anomaly of the ML model, the second apparatus 204 may transmit, to a third apparatus corresponding to a producer of the ML model, the positive detection of anomaly of the ML model. In some example embodiments, the third apparatus may comprise a NF, such as NWDAF MtLF which trains the ML model. In some example embodiments, as a punishment the second apparatus 204 may add a vendor of the ML model (corresponding to the owner or producer of the ML model) into a blacklist to its trust credit.

It would be appreciated that the first apparatus 202 and/or the second apparatus 204 may apply any following action with respect to the anormal ML models according to actual applications and requirements, and the scope of the present disclosure is not limited in this regard.

Through the example embodiments of the present disclosure, a mechanism can be applied to detect model anomaly when a new ML model is provisioned or transferred between NFs or parties. As such, early detection of abnormal model behaviors is supported, to protect the ML model from being attacked or maliciously tampered and mitigate the problem of potential data leakage. The data and model security can thus be improved. In addition, a trusted apparatus may be involved to make a positive confirmation of whether the ML model is malicious and may take following actions accordingly.

FIG. 3 illustrates an example signaling chart 300 for abnormal model behavior detection according to some further example embodiments of the present disclosure. The signaling chart 300 illustrates some example embodiments related to the case where the ML model is provisioned or transferred from a third apparatus 301 to the second apparatus 204, as mentioned above.

In some example embodiments, the signaling chart 300 may further involve an NRF apparatus 303 which may comprise an authorization server, such NRF 136 in the communication system 100. In some example embodiments, the signaling chart 300 may further involve an ADRF apparatus 305 which may comprise ADRF 138 in the communication system 100.

In the signaling chart 300, it is assumed that the ML model is available at the third apparatus 301, which may be for example, NF service producer of ML service. In some example embodiments, the third apparatus 301 may be an NF which trains the ML model, such as NWDAF MtLF. In some example embodiments, the third apparatus 301 may be provisioned with the ML model otherwise and has a permission to share the ML model with other apparatus.

In some example embodiments, the third apparatus 301 stores 302 the ML model and the expected behavior information in the ADRF apparatus 305. In some example embodiments, the ML model may be stored in encrypted format. The third apparatus 301 may register its profile information with the NRF apparatus 303. The third apparatus 301 stores 306 model identity (ID) information into the NRF apparatus 303, for example, during the registration.

In the case that the first apparatus 202 expects to consume the ML model, it transmits 310 an access token request to the NRF apparatus 303. The access token request may incident the model ID information of the ML model. Upon receiving 312 the request, the NRF apparatus 303 may verify whether the first apparatus 202is authorized to retrieve the ML model stored at the ADRF apparatus 305. After the result of the verifying is positive, the NRF apparatus 303 transmits 314, to the first apparatus 202, an access token response including an access token for the ML model.

Upon receiving 316 the access token, the first apparatus 202 transmits 318, to the ADRF apparatus 305, a service request with the access token received, to retrieve the ML model. The ADRF apparatus 305 receives 320 the service request and verify the access token. After the access token is verified, the ADRF apparatus 305 transmits 322 a service response to the first apparatus 202, to download the ML model and the expected behavior information.

Upon receiving 324 the service response, the first apparatus 202 obtains the ML model and the expected behavior information. In some example embodiments, the ML model may be obtained in encrypted format, such as deployed in a container. The first apparatus 202 may use the encrypted ML model (maybe deployed as a container) as a black box, and derive the inference for the specific model inputs using a predefined API.

The first apparatus 202 then monitors 328 behavior information of the ML model during execution of this model and determines 330 occurrence of an abnormal behavior of the machine learning model during the execution by comparing the monitored behavior information with the expected behavior information. The operations at 328 and 330 are similar as those discussed with reference to FIG. 2. In the case that the first apparatus 202 detects an abnormal behavior and/or an adversarial attack, the first apparatus 202 transmits 332 a request for anomaly detection to the second apparatus 204. The second apparatus 204 may be trusted by the first apparatus 202. Thus, upon receiving 334 the request, the second apparatus 204 may help confirm whether the suspicious ML model is actually malicious.

The second apparatus 204 may be able to download an encrypted version of the ML model from the ADRF apparatus 305 or receive it from the first apparatus 202. The second apparatus 204 may transmit 336, to the NRF apparatus 303, a request for an encryption key for the ML model. Upon receiving 338, The NRF apparatus 303 may respond 340 the request with the encryption key. The second apparatus 204 receives 342 the encryption key and thus may obtain a decrypted version of the ML model by decrypting the encryption version of the ML model with the encryption key. The second apparatus 204 detects 344 anomaly of the machine learning model by analyzing the decrypted version of the machine learning model against the behavior information monitored at the first apparatus. The anomaly detection is similar as discussed with reference to FIG. 2.

The second apparatus 204 transmits 346, to the first apparatus 202 and based on the detecting, a response at least indicating a positive detection or a negative detection of anomaly of the machine learning model. With receipt 348 of the response, the first apparatus 202 can confirm whether the machine learning model is malicious or not.

In the case of a detection of anomaly of the machine learning model, the second apparatus 204 may transmit a recommendation to discard the machine learning model to the first apparatus. Alternatively, or in addition, the second apparatus 204 may transmit 350 the positive detection of anomaly of the ML model to the third apparatus 301, to notify it about the anomaly of the ML model. With receipt 352 of the positive detection, the third apparatus 301 may decide a following action to be performed on the ML model and/or the vendor of the ML model.

It is noted that the signaling chart 300 may be considered as an example implementation in the NF environment. As mentioned above, in some other example embodiments, the ML model may be provisioned locally at the first apparatus 202 by a third party and thus, the NRF, ADRF, and third apparatuses may not be involved in the anomaly detection of the ML model.

### Example Methods

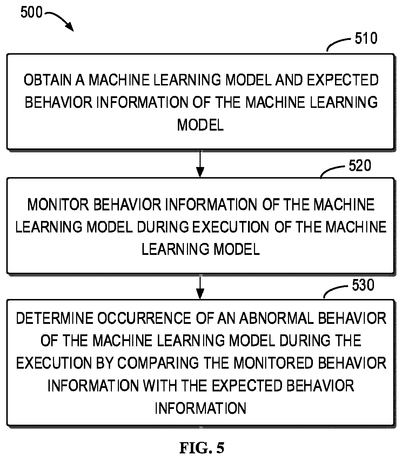

FIG. 5 shows a flowchart of an example method 500 implemented at a first apparatus in accordance with some example embodiments of the present disclosure. For the purpose of discussion, the method 500 will be described from the perspective of the first apparatus 202 in FIG. 2 or FIG. 3.

At block 510, the first apparatus 202 obtains a machine learning model and expected behavior information of the machine learning model.

At block 520, the first apparatus 202 monitors behavior information of the machine learning model during execution of the machine learning model.

At block 530, the first apparatus 202 determines occurrence of an abnormal behavior of the machine learning model during the execution by comparing the monitored behavior information with the expected behavior information.

In some example embodiments, monitoring the behavior information comprises: monitoring at least one of the following: a resource consumption behavior, a network communication behavior, at least a first model output provided by the machine learning model for at least a first model input, or an explanation of the machine learning model, the explanation being derived from at least a second model input and at least a second model output provided by the machine learning model for the at least second model input.

In some example embodiments, the expected behavior information indicates at least one of the following: an expected resource consumption behavior, or an expected network communication behavior. In some example embodiments, determining the occurrence of the abnormal behavior comprises determining that the abnormal behavior occurs based on determining at least one of the following: a mismatch between the monitored resource consumption behavior with the expected resource consumption behavior, or a mismatch between the monitored network communication behavior with the expected network communication behavior.

In some example embodiments, the expected behavior information indicates at least one of the following: an expected type of a model output, or an expected value range of a model output. In some example embodiments, determining the occurrence of the abnormal behavior of the machine learning model comprises determining that the abnormal behavior occurs based on at least one of the following: a mismatch between a type of the at least one monitored model output and the expected type, or a mismatch between a value range of the at least one monitored model output and the expected value range.

In some example embodiments, the expected behavior information indicates an expected explanation type of the machine learning model. In some example embodiments, determining the occurrence of the abnormal behavior of the machine learning model comprises determining that the abnormal behavior occurs based on at least one of the following: a mismatch between a type of the monitored explanation and the expected explanation type.

In some example embodiments, the method 500 further comprises: in accordance with a determination that the abnormal behavior of the machine learning model occurs, determining occurrence of an adversarial attack on the machine learning model by: applying at least one adversarial sample input to the machine learning model, to obtain at least one sample output, and comparing the at least one sample output with at least one ground-truth sample output for the at least one adversarial sample.

In some example embodiments, the method 500 further comprises: transmitting, to a second apparatus, a request for anomaly detection on the machine learning model in accordance with at least one of the following: a determination that the abnormal behavior occurs, or a determination that the adversarial attack occurs; and receiving, from the second apparatus, a response at least indicating a positive detection or a negative detection of anomaly of the machine learning model. In some example embodiments the second apparatus is trusted by an owner of the machine learning model or an operator, and the request at least comprises the behavior information.

In some example embodiments, the method 500 further comprises: receiving, from the second apparatus, a recommendation to discard the machine learning model based on the response indicating the positive detection of anomaly of the machine learning model.

In some example embodiments, the method 500 further comprises: determining an action to be performed on the machine learning model based on the response, the action indicating whether or not to discard the machine learning model.

In some example embodiments, obtaining the machine learning model comprises: retrieving, from a repository, an encrypted version of the machine learning model and the expected behavior information.

In some example embodiments, the first apparatus comprises a network data analytics function in a communication network.

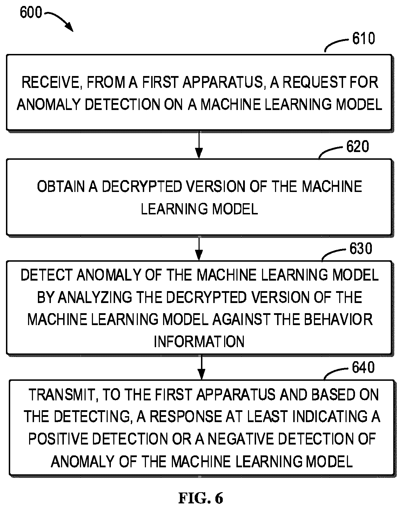

FIG. 6 shows a flowchart of an example method 600 implemented at a second apparatus in accordance with some example embodiments of the present disclosure. For the purpose of discussion, the method 600 will be described from the perspective of the second apparatus 204 in FIG. 2 or FIG. 3.

At block 610, the second apparatus 204 receives, from a first apparatus, a request for anomaly detection on a machine learning model, the request at least comprising behavior information of the machine learning model during execution of the machine learning model on the first apparatus.

At block 620, the second apparatus 204 obtains a decrypted version of the machine learning model.

At block 630, the second apparatus 204 detects anomaly of the machine learning model by analyzing the decrypted version of the machine learning model against the behavior information.

At block 640, the second apparatus 204 transmits, to the first apparatus and based on the detecting, a response at least indicating a positive detection or a negative detection of anomaly of the machine learning model.

In some example embodiments, the second apparatus is trusted by an owner of the machine learning model or by an operator.

In some example embodiments, an encrypted version of the machine learning model is provisioned and executed at the first apparatus.

In some example embodiments, obtaining the decrypted version of the machine learning model comprises: retrieving an encrypted version of the machine learning model from a repository; retrieving an encryption key of the machine learning model from an authorization server for the machine learning model; and decrypting the encrypted version of the machine learning model with the encryption key, to obtain the decrypted version of the machine learning model.

In some example embodiments, the method 600 further comprises: in accordance with a detection of anomaly of the machine learning model, transmitting, to a third apparatus corresponding to a producer of the machine learning model, the positive detection of anomaly of the machine learning model.

In some example embodiments, the method 600 further comprises: adding a vendor of the machine learning model into a blacklist.

In some example embodiments, the second apparatus comprises a network data analytics function in a communication network.

### Example Apparatuses and Medium

In some example embodiments, a first apparatus capable of performing any of the method 500 (for example, the first apparatus 202 in FIG. 2 or FIG. 3) may comprise means for performing the respective operations of the method 500. The means may be implemented in any suitable form. For example, the means may be implemented in a circuitry or software module. The first apparatus may be implemented as or included in the first apparatus 202 in FIG. 1.

In some example embodiments, the first apparatus comprises means for obtaining a machine learning model and expected behavior information of the machine learning model; means for monitoring behavior information of the machine learning model during execution of the machine learning model; and means for determining occurrence of an abnormal behavior of the machine learning model during the execution by comparing the monitored behavior information with the expected behavior information.

In some example embodiments, the means for monitoring the behavior information comprises: means for monitoring at least one of the following: a resource consumption behavior, a network communication behavior, at least a first model output provided by the machine learning model for at least a first model input, or an explanation of the machine learning model, the explanation being derived from at least a second model input and at least a second model output provided by the machine learning model for the at least second model input.

In some example embodiments, the expected behavior information indicates at least one of the following: an expected resource consumption behavior, or an expected network communication behavior. In some example embodiments, the means for determining the occurrence of the abnormal behavior comprises: means for determining that the abnormal behavior occurs based on determining at least one of the following: a mismatch between the monitored resource consumption behavior with the expected resource consumption behavior, or a mismatch between the monitored network communication behavior with the expected network communication behavior.

In some example embodiments, the expected behavior information indicates at least one of the following: an expected type of a model output, or an expected value range of a model output. In some example embodiments, the means for determining the occurrence of the abnormal behavior of the machine learning model comprises: means for determining that the abnormal behavior occurs based on at least one of the following: a mismatch between a type of the at least one monitored model output and the expected type, or a mismatch between a value range of the at least one monitored model output and the expected value range.

In some example embodiments, the expected behavior information indicates an expected explanation type of the machine learning model. In some example embodiments, the means for determining the occurrence of the abnormal behavior of the machine learning model comprises means for determining that the abnormal behavior occurs based on at least one of the following: a mismatch between a type of the monitored explanation and the expected explanation type.

In some example embodiments, the first apparatus further comprises: means for, in accordance with a determination that the abnormal behavior of the machine learning model occurs, determining occurrence of an adversarial attack on the machine learning model by: applying at least one adversarial sample input to the machine learning model, to obtain at least one sample output, and comparing the at least one sample output with at least one ground-truth sample output for the at least one adversarial sample.

In some example embodiments, the first apparatus further comprises: means for transmitting, to a second apparatus, a request for anomaly detection on the machine learning model in accordance with at least one of the following: a determination that the abnormal behavior occurs, or a determination that the adversarial attack occurs; and receiving, from the second apparatus, a response at least indicating a positive detection or a negative detection of anomaly of the machine learning model. In some example embodiments the second apparatus is trusted by an owner of the machine learning model or an operator, and the request at least comprises the behavior information.

In some example embodiments, the first apparatus further comprises: means for receiving, from the second apparatus, a recommendation to discard the machine learning model based on the response indicating the positive detection of anomaly of the machine learning model.

In some example embodiments, the first apparatus further comprises: means for determining an action to be performed on the machine learning model based on the response, the action indicating whether or not to discard the machine learning model.

In some example embodiments, the means for obtaining the machine learning model comprises: means for retrieving, from a repository, an encrypted version of the machine learning model and the expected behavior information.

In some example embodiments, the first apparatus comprises a network data analytics function in a communication network.

In some example embodiments, the first apparatus further comprises means for performing other operations in some example embodiments of the first apparatus or the first apparatus 202. In some example embodiments, the means comprises at least one processor; and at least one memory storing instructions that, when executed by the at least one processor, cause the performance of the first apparatus.

In some example embodiments, a second apparatus capable of performing any of the method 600 (for example, the second apparatus 204 in FIG. 2 or FIG. 3) may comprise means for performing the respective operations of the method 600. The means may be implemented in any suitable form. For example, the means may be implemented in a circuitry or software module. The second apparatus may be implemented as or included in the second apparatus 204 in FIG. 1.

In some example embodiments, the second apparatus comprises means for receiving, from a first apparatus, a request for anomaly detection on a machine learning model, the request at least comprising behavior information of the machine learning model during execution of the machine learning model on the first apparatus; means for obtaining a decrypted version of the machine learning model; means for detecting anomaly of the machine learning model by analyzing the decrypted version of the machine learning model against the behavior information; and means for transmitting, to the first apparatus and based on the detecting, a response at least indicating a positive detection or a negative detection of anomaly of the machine learning model.

In some example embodiments, the second apparatus is trusted by an owner of the machine learning model or by an operator.

In some example embodiments, an encrypted version of the machine learning model is provisioned and executed at the first apparatus.

In some example embodiments, the means for obtaining the decrypted version of the machine learning model comprises: means for retrieving an encrypted version of the machine learning model from a repository; means for retrieving an encryption key of the machine learning model from an authorization server for the machine learning model; and means for decrypting the encrypted version of the machine learning model with the encryption key, to obtain the decrypted version of the machine learning model.

In some example embodiments, the second apparatus further comprises: means for, in accordance with a detection of anomaly of the machine learning model, transmitting, to a third apparatus corresponding to a producer of the machine learning model, the positive detection of anomaly of the machine learning model.

In some example embodiments, the second apparatus further comprises: means for adding a vendor of the machine learning model into a blacklist.

In some example embodiments, the second apparatus comprises a network data analytics function in a communication network.

In some example embodiments, the second apparatus further comprises means for performing other operations in some example embodiments of the method 600 or the second apparatus 204. In some example embodiments, the means comprises at least one processor; and at least one memory storing instructions that, when executed by the at least one processor, cause the performance of the second apparatus.

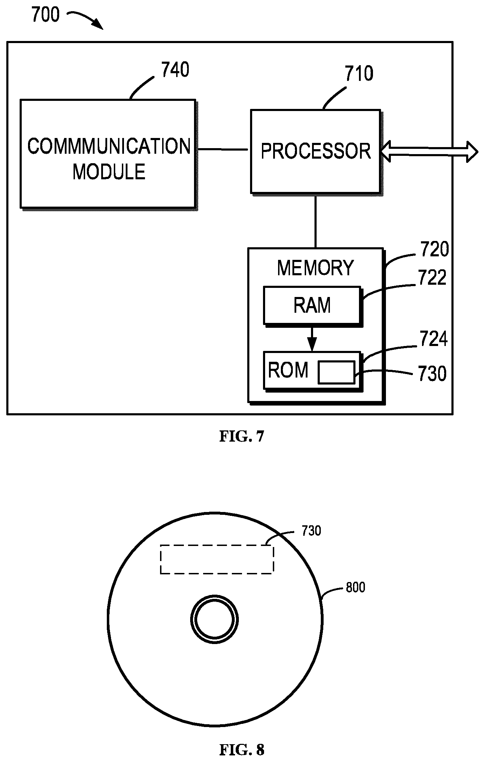

FIG. 7 is a simplified block diagram of an apparatus 700 that is suitable for implementing example embodiments of the present disclosure. The apparatus 700 may be provided to implement, for example, the first apparatus 202, the second apparatus 204, or the third apparatus 305 as shown in FIG. 2 and/or FIG. 3. As shown, the apparatus 700 includes one or more processors 710, one or more memories 720 coupled to the processor 710, and one or more communication modules 740 coupled to the processor 710.

The communication module 740 is for bidirectional communications. The communication module 740 has one or more communication interfaces to facilitate communication with one or more other modules or devices. The communication interfaces may represent any interface that is necessary for communication with other network elements. In some example embodiments, the communication module 740 may include at least one antenna.

The processor 710 may be of any type suitable to the local technical network and may include one or more of the following: general purpose computers, special purpose computers, microprocessors, digital signal processors (DSPs) and processors based on multicore processor architecture, as non-limiting examples. The apparatus 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The instructions of the program 730 may include instructions for performing operations/acts of some example embodiments of the present disclosure. The program 730 may be stored in the memory, e.g., the ROM 724. The processor 710 may perform any suitable actions and processing by loading the program 730 into the RAM 722.

The example embodiments of the present disclosure may be implemented by means of the program 730 so that the apparatus 700 may perform any process of the disclosure as discussed with reference to FIG. 2 to FIG. 6. The example embodiments of the present disclosure may also be implemented by hardware or by a combination of software and hardware.

In some example embodiments, the program 730 may be tangibly contained in a computer readable medium which may be included in the apparatus 700 (such as in the memory 720) or other storage devices that are accessible by the apparatus 700. The apparatus 700 may load the program 730 from the computer readable medium to the RAM 722 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 8 shows an example of the computer readable medium 800 which may be in form of CD, DVD or other optical storage disk. The computer readable medium 800 has the program 730 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus (202; 700) comprising:
means for obtaining (710) a machine learning model and expected behavior information of the machine learning model;
means for monitoring (710) behavior information of the machine learning model during execution of the machine learning model;
means for determining (710) occurrence of an abnormal behavior of the machine learning model during the execution by comparing the monitored behavior information with the expected behavior information; and
means for determining (710) occurrence of an adversarial attack on the machine learning model in accordance with a determination that the abnormal behavior of the machine learning model occurs.

2. The apparatus of claim 1, wherein monitoring the behavior information comprises:
monitoring at least one of the following:
a resource consumption behavior,
a network communication behavior,
at least a first model output provided by the machine learning model for at least a first model input, or
an explanation of the machine learning model, the explanation being derived from at least a second model input and at least a second model output provided by the machine learning model for the at least second model input.

3. The apparatus of claim 2, wherein the expected behavior information indicates at least one of the following: an expected resource consumption behavior, or an expected network communication behavior; and
wherein determining the occurrence of the abnormal behavior comprises determining that the abnormal behavior occurs based on determining at least one of the following:
a mismatch between the monitored resource consumption behavior with the expected resource consumption behavior, or
a mismatch between the monitored network communication behavior with the expected network communication behavior.

4. The apparatus of claim 2, wherein the expected behavior information indicates at least one of the following: an expected type of a model output, or an expected value range of a model output; and
wherein determining the occurrence of the abnormal behavior of the machine learning model comprises determining that the abnormal behavior occurs based on at least one of the following:
a mismatch between a type of the at least one monitored model output and the expected type, or
a mismatch between a value range of the at least one monitored model output and the expected value range.

5. The apparatus of claim 2, wherein the expected behavior information indicates an expected explanation type of the machine learning model, and
wherein determining the occurrence of the abnormal behavior of the machine learning model comprises determining that the abnormal behavior occurs based on at least one of the following:
a mismatch between a type of the monitored explanation and the expected explanation type.

6. The apparatus of any one of claims 1 to 5, wherein occurrence of the adversarial attack on the machine learning model is determined by:
applying at least one adversarial sample input to the machine learning model, to obtain at least one sample output, and
comparing the at least one sample output with at least one ground-truth sample output for the at least one adversarial sample.

7. The apparatus of any one of claims 1 to 6, further comprising:
means for transmitting (710, 740), to another apparatus (204), a request for anomaly detection on the machine learning model in accordance with at least one of the following: a determination that the abnormal behavior occurs or a determination that the adversarial attack occurs,
wherein the another apparatus is trusted by an owner of the machine learning model or an operator, and the request at least comprises the behavior information; and
means for receiving (710, 740), from the another apparatus, a response at least indicating a positive detection or a negative detection of anomaly of the machine learning model.

8. The apparatus of claim 7, further comprising:
means for receiving, (710, 740) from the another apparatus, a recommendation to discard the machine learning model based on the response indicating the positive detection of anomaly of the machine learning model.

9. The apparatus of claim 7, further comprising:
means for determining (710) an action to be performed on the machine learning model based on the response, the action indicating whether or not to discard the machine learning model.

10. The apparatus of any one of claims 1 to 9, wherein the first apparatus comprises a network data analytics function in a communication network.

11. A method comprising:
obtaining (510) a machine learning model and expected behavior information of the machine learning model;
monitoring (520) behavior information of the machine learning model during execution of the machine learning model;
determining (530) occurrence of an abnormal behavior of the machine learning model during the execution by comparing the monitored behavior information with the expected behavior information; and
determining occurrence of an adversarial attack on the machine learning model in accordance with a determination that the abnormal behavior of the machine learning model occurs.

12. The method of claim 11, wherein monitoring the behavior information comprises:
monitoring at least one of the following:
a resource consumption behavior,
a network communication behavior,
at least a first model output provided by the machine learning model for at least a first model input, or
an explanation of the machine learning model, the explanation being derived from at least a second model input and at least a second model output provided by the machine learning model for the at least second model input.

13. The method of claim 11 or 12, wherein occurrence of the adversarial attack on the machine learning model is determined by:
applying at least one adversarial sample input to the machine learning model, to obtain at least one sample output, and
comparing the at least one sample output with at least one ground-truth sample output for the at least one adversarial sample.

14. The method of any one of claims 11 to 13, further comprising:
transmitting, to another apparatus, a request for anomaly detection on the machine learning model in accordance with at least one of the following: a determination that the abnormal behavior occurs or a determination that the adversarial attack occurs,
wherein the another apparatus is trusted by an owner of the machine learning model or an operator, and the request at least comprises the behavior information; and
receiving, from the another apparatus, a response at least indicating a positive detection or a negative detection of anomaly of the machine learning model.

15. A computer program product including computer-executable instructions which, when being executed in an apparatus, cause the apparatus to carry out the method of any one of claims 11 to 14.

## Patentansprüche

1. Einrichtung (202; 700), die Folgendes umfasst:
Mittel zum Erhalten (710) eines Maschinenlernmodells und von erwarteten Verhaltensinformationen des Maschinenlernmodells;
Mittel zum Überwachen (710) von Verhaltensinformationen des Maschinenlernmodells während einer Ausführung des Maschinenlernmodells;
Mittel zum Bestimmen (710) eines Auftretens eines unnormalen Verhaltens des Maschinenlernmodells während der Ausführung durch Vergleichen der überwachten Verhaltensinformationen mit erwarteten Verhaltensinformationen; und
Mittel zum Bestimmen (710) eines Auftretens eines feindseligen Angriffs auf das Maschinenlernmodell gemäß einer Bestimmung, dass das unnormale Verhalten des Maschinenlernmodells auftritt.

2. Einrichtung nach Anspruch 1, wobei das Überwachen der Verhaltensinformationen Folgendes umfasst:
Überwachen von mindestens einem von Folgendem:
einem Ressourcenverbrauchsverhalten,
einem Netzwerkkommunikationsverhalten,
mindestens einer ersten Modellausgabe, die vom Maschinenlernmodell für mindestens eine erste Modelleingabe bereitgestellt wird, oder
einer Erklärung des Maschinenlernmodells, wobei die Erklärung aus mindestens einer zweiten Modelleingabe und mindestens einer zweiten Modellausgabe, die vom Maschinenlernmodell für die mindestens eine zweite Modelleingabe bereitgestellt wird, abgeleitet wird.

3. Einrichtung nach Anspruch 2, wobei die erwarteten Verhaltensinformationen mindestens eines von Folgendem umfassen: einem erwarteten Ressourcenverbrauchsverhalten oder einem erwarteten Netzwerkkommunikationsverhalten; und
wobei das Bestimmen des Auftretens des unnormalen Verhaltens das Bestimmen umfasst, dass das unnormale Verhalten auf Basis des Bestimmens von mindestens einem von Folgendem auftritt:
einer Nichtübereinstimmung zwischen dem überwachten Ressourcenverbrauchsverhalten mit dem erwarteten Ressourcenverbrauchsverhalten, oder
einer Nichtübereinstimmung zwischen dem überwachten Netzwerkkommunikationsverhalten mit dem erwarteten Netzwerkkommunikationsverhalten.

4. Einrichtung nach Anspruch 2, wobei die erwarteten Verhaltensinformationen mindestens eines von Folgendem umfassen: einer erwarteten Art einer Modellausgabe oder einem erwarteten Wertebereich einer Modellausgabe; und
wobei das Bestimmen des Auftretens des unnormalen Verhaltens des Maschinenlernmodells das Bestimmen umfasst, dass das unnormale Verhalten auf Basis von mindestens einem von Folgendem auftritt:
einer Nichtübereinstimmung zwischen einer Art der mindestens einen überwachten Modellausgabe und der erwarteten Art, oder
einer Nichtübereinstimmung zwischen einem Wertebereich der mindestens einen überwachten Modellausgabe und dem erwarteten Wertebereich.

5. Einrichtung nach Anspruch 2, wobei die erwarteten Verhaltensinformationen eine erwartete Erklärungsart des Maschinenlernmodells anzeigen, und
wobei das Bestimmen des Auftretens des unnormalen Verhaltens des Maschinenlernmodells das Bestimmen umfasst, dass das unnormale Verhalten auf Basis von mindestens einem von Folgendem auftritt:
einer Nichtübereinstimmung zwischen einer Art der überwachten Erklärung und der erwarteten Erklärungsart.

6. Einrichtung nach einem der Ansprüche 1 bis 5, wobei ein Auftreten des feindseligen Angriffs auf das Maschinenlernmodell durch Folgendes bestimmt wird:
Anwenden von mindestens einer feindseligen Beispieleingabe in das Maschinenlernmodell, um mindestens eine Beispielausgabe zu erhalten, und
Vergleichen der mindestens einen Beispielausgabe mit mindestens einer Bodenwahrheitsbeispielausgabe für das mindestens eine feindselige Beispiel.

7. Einrichtung nach einem der Ansprüche 1 bis 6, die ferner Folgendes umfasst:
Mittel zum Übertragen (710, 740) einer Anforderung einer Anomaliedetektion am Maschinenlernmodell gemäß mindestens einem von Folgendem zu einer anderen Einrichtung (204): einer Bestimmung dass das unnormale Verhalten auftritt, oder einer Bestimmung, dass der feindselige Angriff auftritt,
wobei die andere Einrichtung für einen Besitzer des Maschinenlernmodells oder einen Bediener vertrauenswürdig ist und die Anforderung mindestens die Verhaltensinformationen umfassen; und
Mittel zum Empfangen (710, 740) einer Antwort, die mindestens eine positive Detektion oder eine negative Detektion einer Anomalie des Maschinenlernmodells anzeigt, von der anderen Einrichtung.

8. Einrichtung nach Anspruch 7, die ferner Folgendes umfasst:
Mittel zum Empfangen (710, 740) einer Empfehlung zum Verwerfen des Maschinenlernmodells auf Basis der Antwort, die eine positive Detektion einer Anomalie des Maschinenlernmodells anzeigt, von der anderen Einrichtung.

9. Einrichtung nach Anspruch 7, die ferner Folgendes umfasst:
Mittel zum Bestimmen (710) einer Aktion, die auf Basis der Antwort am Maschinenlernmodell durchzuführen ist, wobei die Aktion anzeigt, ob das Maschinenlernmodell verworfen werden soll oder nicht.

10. Einrichtung nach einem der Ansprüche 1 bis 9, wobei die erste Einrichtung eine Netzwerkdatenanalysefunktion in einem Kommunikationsnetzwerk umfasst.

11. Verfahren, das Folgendes umfasst:
Erhalten (510) eines Maschinenlernmodells und von erwarteten Verhaltensinformationen des Maschinenlernmodells;
Überwachen (520) von Verhaltensinformationen des Maschinenlernmodells während einer Ausführung des Maschinenlernmodells;
Bestimmen (530) eines Auftretens eines unnormalen Verhaltens des Maschinenlernmodells während der Ausführung durch Vergleichen der überwachten Verhaltensinformationen mit erwarteten Verhaltensinformationen; und
Bestimmen eines Auftretens eines feindseligen Angriffs auf das Maschinenlernmodell gemäß einer Bestimmung, dass das unnormale Verhalten des Maschinenlernmodells auftritt.

12. Verfahren nach Anspruch 11, wobei das Überwachen von Verhaltensinformationen Folgendes umfasst:
Überwachen von mindestens einem von Folgendem:
einem Ressourcenverbrauchsverhalten,
einem Netzwerkkommunikationsverhalten,
mindestens einer ersten Modellausgabe, die vom Maschinenlernmodell für mindestens eine erste Modelleingabe bereitgestellt wird, oder
einer Erklärung des Maschinenlernmodells, wobei die Erklärung aus mindestens einer zweiten Modelleingabe und mindestens einer zweiten Modellausgabe, die vom Maschinenlernmodell für die mindestens eine zweite Modelleingabe bereitgestellt wird, abgeleitet wird.

13. Verfahren nach Anspruch 11 oder 12, wobei ein Auftreten des feindseligen Angriffs auf das Maschinenlernmodell durch Folgendes bestimmt wird:
Anwenden von mindestens einer feindseligen Beispieleingabe in das Maschinenlernmodell, um mindestens eine Beispielausgabe zu erhalten, und
Vergleichen der mindestens einen Beispielausgabe mit mindestens einer Bodenwahrheitsbeispielausgabe für das mindestens eine feindselige Beispiel.

14. Verfahren nach einem der Ansprüche 11 bis 13, das ferner Folgendes umfasst:
Übertragen einer Anforderung einer Anomaliedetektion am Maschinenlernmodell gemäß mindestens einem von Folgendem zu einer anderen Einrichtung: einer Bestimmung dass das unnormale Verhalten auftritt, oder einer Bestimmung, dass der feindselige Angriff auftritt,
wobei die andere Einrichtung für einen Besitzer des Maschinenlernmodells oder einen Bediener vertrauenswürdig ist und die Anforderung mindestens die Verhaltensinformationen umfassen; und
Empfangen einer Antwort, die mindestens eine positive Detektion oder eine negative Detektion einer Anomalie des Maschinenlernmodells anzeigt, von der anderen Einrichtung.

15. Computerprogrammprodukt, das computerausführbare Anweisungen beinhaltet, die, wenn sie in einer Einrichtung ausgeführt werden, die Einrichtung veranlassen, das Verfahren nach einem der Ansprüche 11 bis 14 umzusetzen.

## Revendications

1. Appareil (202 ; 700) comprenant :
des moyens pour obtenir (710) un modèle d'apprentissage machine et des informations de comportement attendues du modèle d'apprentissage machine ;
des moyens pour surveiller (710) des informations de comportement du modèle d'apprentissage machine pendant l'exécution du modèle d'apprentissage machine ;
des moyens pour déterminer (710) l'occurrence d'un comportement anormal du modèle d'apprentissage machine pendant l'exécution en comparant les informations de comportement surveillées avec les informations de comportement attendues ; et
des moyens pour déterminer (710) l'occurrence d'une attaque adverse sur le modèle d'apprentissage machine lorsqu'il est déterminé que le comportement anormal du modèle d'apprentissage machine se produit.

2. Appareil selon la revendication 1, dans lequel la surveillance des informations de comportement comprend ce qui suit :
surveiller au moins l'un des éléments suivants :
un comportement de consommation de ressources,
un comportement de communication réseau,
au moins une première sortie de modèle fournie par le modèle d'apprentissage machine pour au moins une première entrée de modèle, ou
une explication du modèle d'apprentissage machine, l'explication étant dérivée d'au moins une deuxième entrée de modèle et d'au moins une deuxième sortie de modèle fournies par le modèle d'apprentissage machine pour l'au moins une deuxième entrée de modèle.

3. Appareil selon la revendication 2, dans lequel les informations de comportement attendues indiquent : un comportement de consommation de ressources attendu et/ou un comportement de communication réseau attendu ; et
dans lequel le fait de déterminer l'occurrence du comportement anormal comprend le fait de déterminer que le comportement anormal se produit en déterminant au moins l'un des éléments suivants :
une inadéquation entre le comportement de consommation de ressources surveillé et le comportement de consommation de ressources attendu, ou
une inadéquation entre le comportement de communication réseau surveillé et le comportement de communication réseau attendu.

4. Appareil selon la revendication 2, dans lequel les informations de comportement attendues indiquent : un type attendu d'une sortie de modèle et/ou une plage de valeurs attendues d'une sortie de modèle ; et
dans lequel le fait de déterminer l'occurrence du comportement anormal du modèle d'apprentissage machine comprend le fait de déterminer que le comportement anormal se produit en se basant au moins sur l'un des éléments suivants :
une inadéquation entre un type de l'au moins une sortie de modèle surveillée et le type attendu, ou
une inadéquation entre une plage de valeurs de l'au moins une sortie de modèle surveillée et la plage de valeurs attendues.

5. Appareil selon la revendication 2, dans lequel les informations de comportement attendues indiquent un type d'explication attendu du modèle d'apprentissage machine, et
dans lequel le fait de déterminer l'occurrence du comportement anormal du modèle d'apprentissage machine comprend le fait de déterminer que le comportement anormal se produit en se basant au moins sur l'un des éléments suivants :
une inadéquation entre un type de l'explication surveillée et le type d'explication attendu.

6. Appareil selon l'une des revendications 1 à 5, dans lequel l'occurrence de l'attaque adverse sur le modèle d'apprentissage machine est déterminée :
en appliquant au moins un échantillon adverse entré dans le modèle d'apprentissage machine afin d'obtenir au moins un échantillon de sortie, et
en comparant l'au moins un échantillon de sortie avec au moins un échantillon de référence de sortie pour l'au moins un échantillon adverse.

7. Appareil selon l'une des revendications 1 à 6, comprenant en outre :
des moyens pour transmettre (710, 740) à un autre appareil (204) une demande de détection d'anomalie sur le modèle d'apprentissage machine : en déterminant que le comportement anormal se produit et/ou en déterminant que l'attaque adverse se produit,
dans lequel l'autre appareil est approuvé par un propriétaire du modèle d'apprentissage machine ou un opérateur, et la demande comprend au moins les informations de comportement ; et
des moyens pour recevoir (710, 740) de l'autre appareil une réponse indiquant au moins une détection positive ou une détection négative d'anomalie du modèle d'apprentissage machine.

8. Appareil selon la revendication 7, comprenant en outre :
des moyens pour recevoir (710, 740) de l'autre appareil une recommandation de rejeter le modèle d'apprentissage machine sur la base de la réponse indiquant la détection positive d'anomalie du modèle d'apprentissage machine.

9. Appareil selon la revendication 7, comprenant en outre :
des moyens pour déterminer (710) une action à effectuer sur le modèle d'apprentissage machine sur la base de la réponse, l'action indiquant s'il faut ou non rejeter le modèle d'apprentissage machine.

10. Appareil selon l'une des revendications 1 à 9, dans lequel le premier appareil comprend une fonction d'analyse de données réseau dans un réseau de communication.

11. Procédé comprenant les étapes suivantes :
obtenir (510) un modèle d'apprentissage machine et des informations de comportement attendues du modèle d'apprentissage machine ;
surveiller (520) des informations de comportement du modèle d'apprentissage machine pendant l'exécution du modèle d'apprentissage machine ;
déterminer (530) l'occurrence d'un comportement anormal du modèle d'apprentissage machine pendant l'exécution en comparant les informations de comportement surveillées avec les informations de comportement attendues ; et
déterminer l'occurrence d'une attaque adverse sur le modèle d'apprentissage machine en déterminant que le comportement anormal du modèle d'apprentissage machine se produit.

12. Procédé selon la revendication 11, dans lequel la surveillance des informations de comportement comprend ce qui suit :
surveiller au moins l'un des éléments suivants :
un comportement de consommation de ressources,
un comportement de communication réseau,
au moins une première sortie de modèle fournie par le modèle d'apprentissage machine pour au moins une première entrée de modèle, ou
une explication du modèle d'apprentissage machine, l'explication étant dérivée d'au moins une deuxième entrée de modèle et d'au moins une deuxième sortie de modèle fournies par le modèle d'apprentissage machine pour l'au moins une deuxième entrée de modèle.

13. Procédé selon la revendication 11 ou 12, dans lequel l'occurrence de l'attaque adverse sur le modèle d'apprentissage machine est déterminée :
en appliquant au moins un échantillon adverse entré dans le modèle d'apprentissage machine afin d'obtenir au moins un échantillon de sortie, et
en comparant l'au moins un échantillon de sortie avec au moins un échantillon de référence de sortie pour l'au moins un échantillon adverse.

14. Procédé selon l'une des revendications 11 à 13, comprenant en outre l'étape suivante :
transmettre à un autre appareil une demande de détection d'anomalie sur le modèle d'apprentissage machine : en déterminant que le comportement anormal se produit et/ou en déterminant que l'attaque adverse se produit,
dans lequel l'autre appareil est approuvé par un propriétaire du modèle d'apprentissage machine ou un opérateur, et la demande comprend au moins les informations de comportement ; et
recevoir de l'autre appareil une réponse indiquant au moins une détection positive ou une détection négative d'anomalie du modèle d'apprentissage machine.

15. Produit de programme informatique comportant des instructions exécutables par ordinateur qui, lorsqu'elles sont exécutées dans un appareil, amènent l'appareil à mettre en œuvre le procédé selon l'une des revendications 11 à 14.
